# EUROPEAN PATENT APPLICATION

(11) **EP 4 588 830 A1**
(43) Date of publication of application: **23.07.2025**
(21) Application number: 24153030.2
(22) Date of filing: 22.01.2024
(51) Int. Cl.: B65G 1/04, B65G 1/10, B65G 1/137

(54) **A STORAGE RACK**

(71) Applicant: AUTOSTORE TECHNOLOGY AS, 5578 Nedre Vats (NO)
(72) Inventor: Jun, David, 5578 Nedre Vats (NO)
(74) Representative: Kilburn & Strode LLP

(57) **Abstract**

The disclosure relates to a storage rack for an automated storage and retrieval system, the storage rack comprising: a frame; and a first container-receiving element and a second-container receiving element, wherein each of the container-receiving elements is supported by the frame, wherein the second container-receiving element is disposed above the first container-receiving element in the frame, and wherein each of the container-receiving elements is movable between: a first configuration relative to the frame, in which the container-receiving element is configured to receive a storage container from a container-handling vehicle; and a second configuration relative to the frame, in which the container-receiving element is oriented such that the storage container is supported in a presentation position in which an item stored in the storage container can be accessed by a user.

## Description

### TECHNICAL FIELD

The disclosure relates to a storage rack. More particularly, it relates to a storage rack for an automated storage and retrieval system. The disclosure also relates to an automated storage and retrieval system comprising a storage rack, and to a method of controlling one or more container-handling vehicles in an automated storage and retrieval system comprising a storage rack.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Items that are frequently picked during processing of orders are colloquially referred to as 'high runners'. It will be appreciated that repeatedly transporting containers storing frequently-picked items between the grid and the ports at which the items are picked results in inefficiencies in the automated storage and retrieval system. In particular, a high number of robot movements are required in order to repeatedly transport such containers between the grid and the ports.

One solution for minimising the amount of time spent waiting for high runners to be delivered to ports (and for minimising robot movements in the automated storage and retrieval system) is to store high runner items outside of the automated storage and retrieval system. For example, high runner items may be stored in pallet storage on the warehouse floor, or in Digital Picking System (DPS), or 'pick to light', shelving. However, storing high runner items in an additional storage system outside of the automated storage and retrieval system requires a separate system to manage the inventory of the additional storage system, and to replenish the high runner items once they are depleted. For example, a mini load system may be implemented in order to replenish high runner items in DPS shelving.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a perspective view of a storage rack;
Fig. 6 shows a perspective view of the storage rack of Fig. 5 located adjacent to a port of the storage system shown in Fig. 1;
Fig. 7 shows a perspective view of multiple units of the storage rack of Fig. 5 located adjacent to ports of the storage system shown in Fig. 1;
Fig. 8 shows a perspective view of multiple units of the storage rack of Fig. 5 located in a rack storage area;
Fig. 9 shows a flowchart of a method carried out by a processing system of the storage system described herein;
Fig. 10 shows a flowchart of a further method carried out by the processing system of the storage system described herein.

### DETAILED DESCRIPTION

In overview, the disclosure relates to a storage rack for an automated storage and retrieval system. The storage rack includes a frame and multiple container-receiving elements such as shelves. The shelves are supported by the frame such that one shelf is disposed above another shelf. Each shelf is movable between a first configuration relative to the frame and a second configuration relative to the frame. In its first configuration, the shelf can receive a container from a robot. In its second configuration, the shelf is oriented such that the container is supported in a presentation position, so that items within the container can be picked.

The storage rack can be used to store containers holding frequently picked items (`high runners'). Where an order comprises one or more high runners, the high runner items can be picked from the storage rack, instead of waiting for containers holding the high runners to be delivered to a port. Where one or more storage racks are located adjacent to a port, waiting time at the port is reduced, because high runner items can be picked from the storage rack(s) while waiting for containers holding other items in the order to be delivered to the port. Orders comprising high runner items can therefore be processed more quickly at the ports of the automated storage and retrieval system.

In addition, as fewer containers need to be delivered to a port in order for an order comprising one or more high runners to be processed, the number of robot movements in the automated storage and retrieval system is reduced. This reduces the amount of robot traffic within the system, thereby decreasing delays arising from robot traffic, while also reducing the number of robots that are needed in the system, thereby increasing operational efficiency.

The movement of a shelf from its second configuration to its first configuration allows a container to be supported outside the frame of the storage rack, so that it can be collected by one of the robots. For example, bins that are empty or that contain items that are less frequently picked can be returned to the grid. Likewise, the movement of a shelf from its first configuration to its second configuration allows a container to be delivered to the shelf and then moved to its presentation position. This means that high runner items can be replenished by the robots. In addition, containers storing items that are less frequently picked can be replaced by containers storing items that are more frequently picked.

Allowing containers to be transported between the storage rack and the grid also permits the inventory of the storage racks to be monitored by the automated storage and retrieval system. Therefore, the inventory of both the grid and the storage racks can be monitored using a single system, removing the need for a separate system for inventory management and replenishment of high runner items. In addition, where one or more storage racks are located adjacent to ports, the integration between the storage racks and the automated storage and retrieval system allows the automated storage and retrieval system to allocate an order comprising one or more high runners to the port having the highest proportion of high runners of that order stored in adjacent storage rack(s). This minimises the number of robot movements in the automated storage and retrieval system.

### Automated storage and retrieval system overview

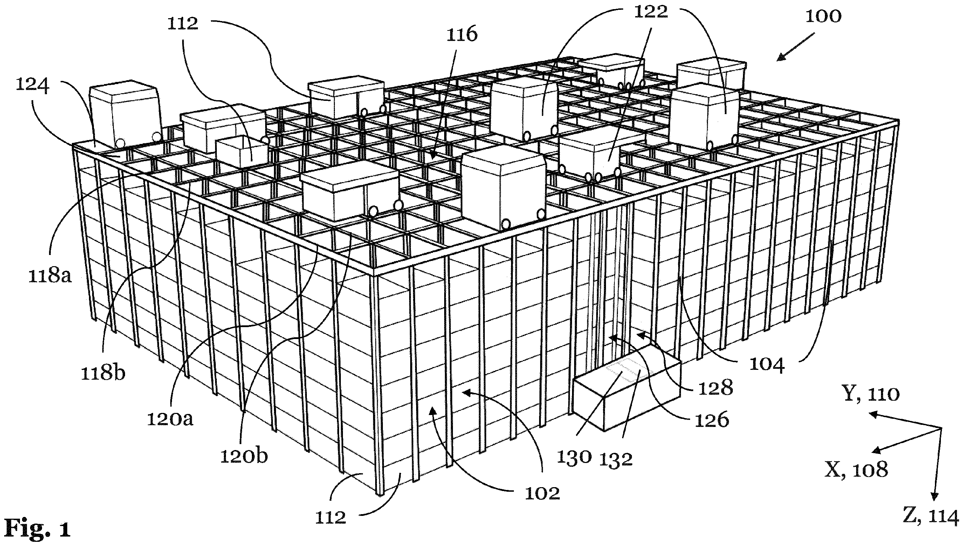

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

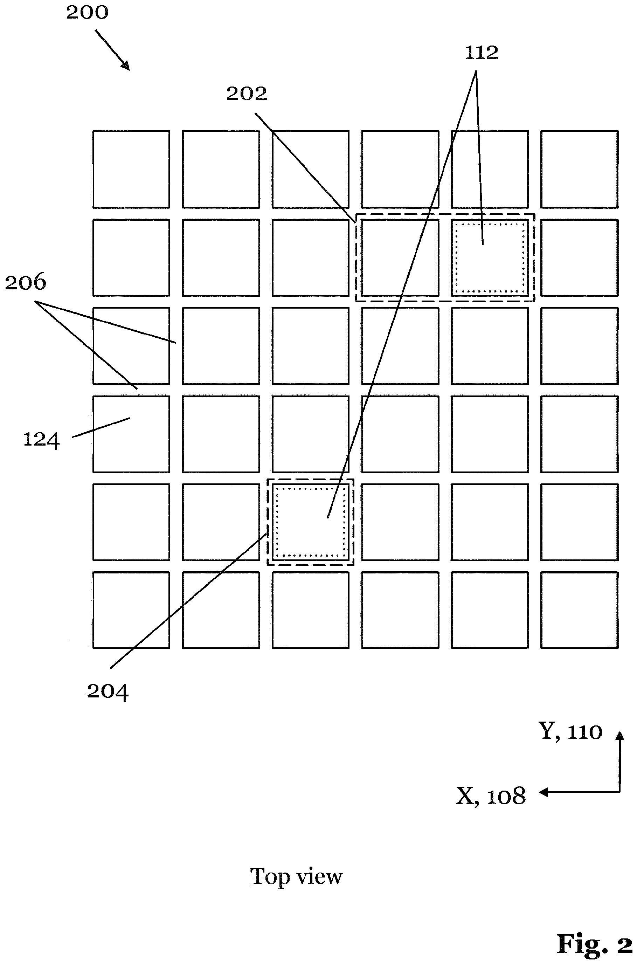

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

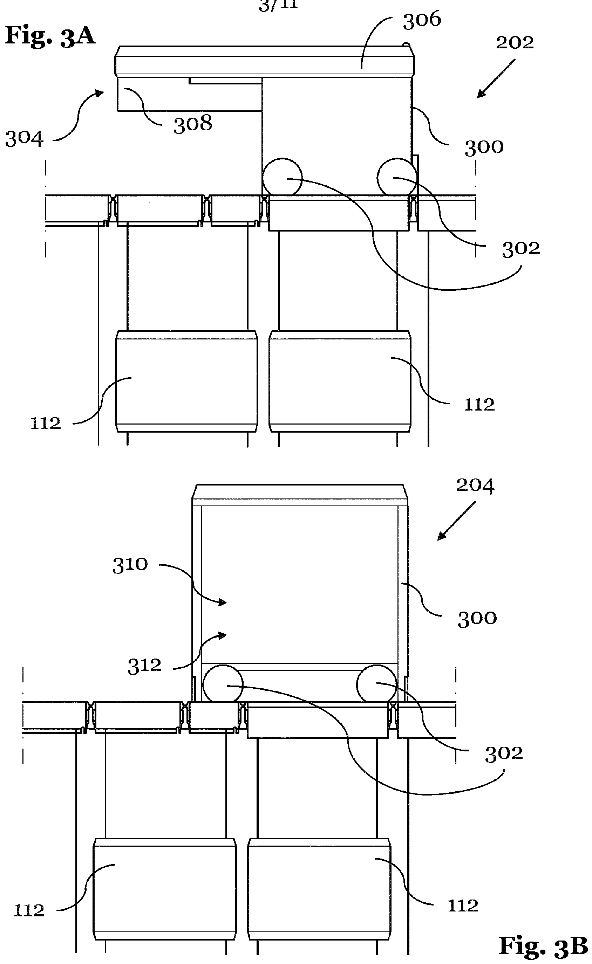

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

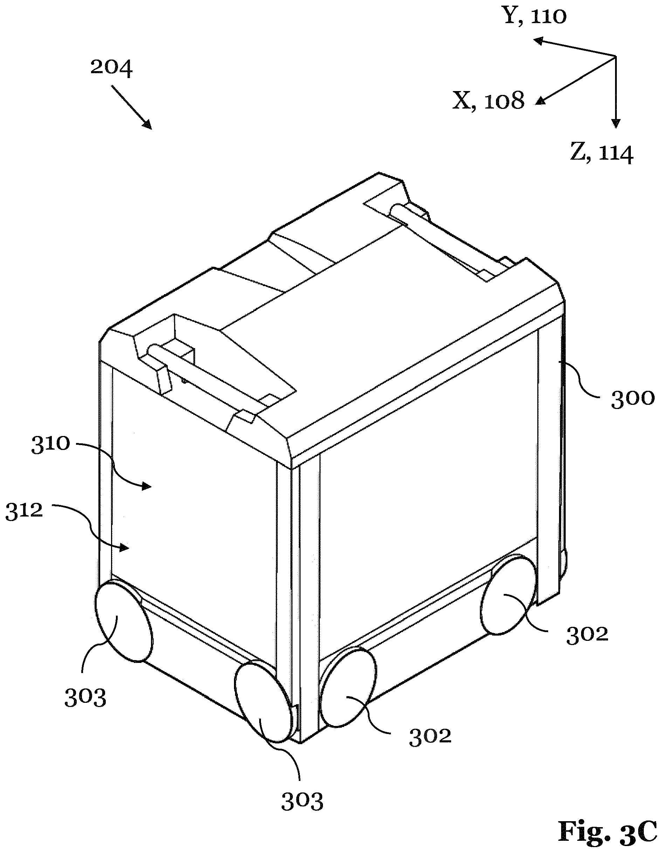

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

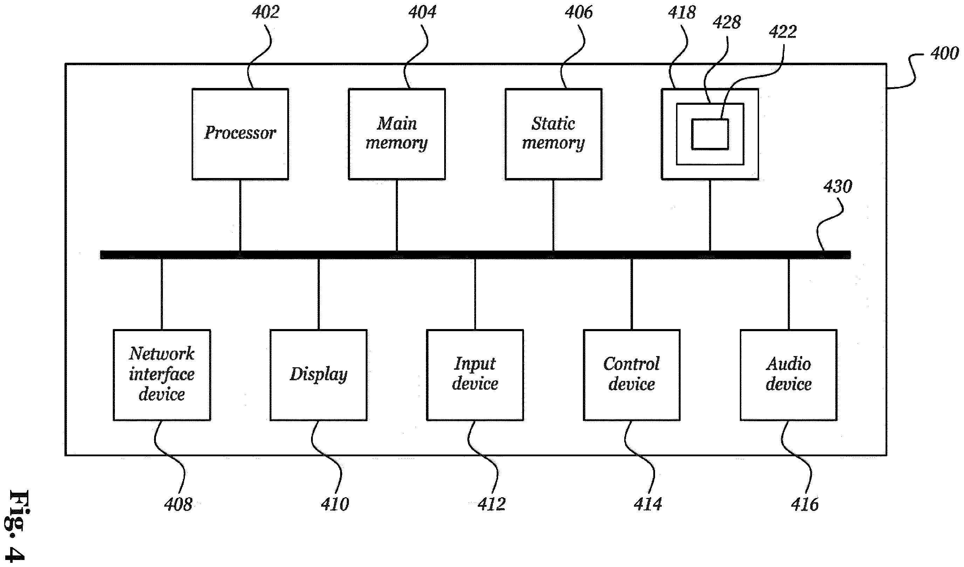

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Storage rack

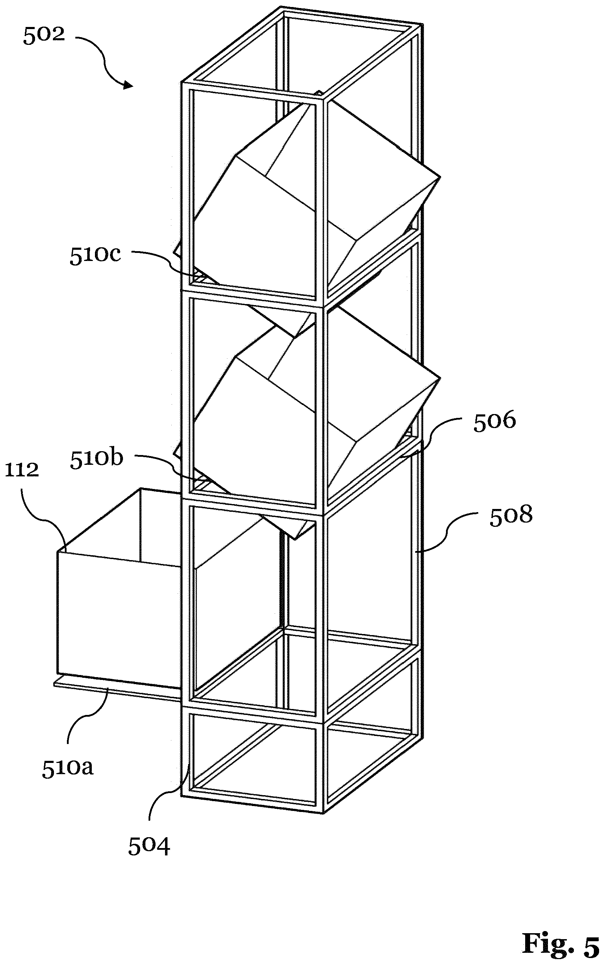

Fig. 5 is a schematic diagram of a storage rack 502 that may be used with the automated storage and retrieval system described above, through integration with the grid 100. In particular, the storage rack 502 may be used to store bins 112 containing items that are frequently picked (also referred to as 'high runners'). Implementing the storage rack 502 to store bins 112 containing high runners means that processing an order comprising one or more high runner items within the bins 112 stored in the storage rack 502 requires fewer bins 112 to be retrieved from the grid 100 by the robots 202, 204. This means that the items required for processing an order are made available more quickly at the ports 130, 132.

As shown in Fig. 5, the storage rack 502 includes a frame 504 having horizontal rack frame members 506 and vertical rack frame members 508. The horizontal rack frame members 506 provide support for a number of container-receiving elements, shown in Fig. 5 in the form of shelves 510. The vertical rack frame members 508 allow multiple shelves 510 to be supported in a single vertical column. In the example shown in Fig. 5, three shelves 510 are supported in a single vertical column. It will be appreciated that alternative container-receiving elements (e.g., guide rods) may be used instead of shelves 510.

Each shelf 510 is moveable between two configurations. Fig. 5 shows that a first shelf 510a is in a first configuration relative to the frame 504. A second shelf 510b and a third shelf 510c are each in a second configuration relative to the frame 504, but are obscured by the bins 112 that they support. Specifically, the second shelf 510b and third shelf 510c are each parallel to a base of the bin 112 that they support.

When a shelf 510 is in its first configuration, it extends at least partly outside the frame 504 so that it can receive a bin 112. For example, the bin 112 may be lowered onto the shelf 510 when the shelf 510 is in its first configuration by a robot 202, 204, as described above.

When a shelf 510 is in its second configuration, the shelf 510 supports the bin 112 in a presentation position, in which the items within the bin 112 can be accessed by a picker. For example, the shelf 510 may rotate to support the base of the bin 112 in an angled position with respect to the horizontal, as shown in Fig. 5, so that a picker can more easily access the items stored within the bin 112. In order to allow bins to be lowered onto lower shelves 510 (e.g., the first shelf 510a in Fig. 5), the shelves 510 may support the bins 112 in the second configuration so that the shelves 510 and the bins 112 that they support do not obstruct the lowering of a bin 112 onto a lower shelf 510 that is in its first configuration. As an alternative to supporting a bin 112 in the presentation position, each shelf 510 may, in its second configuration, be oriented such that the bin 112 is supported in the presentation position partly by the frame 504 (e.g., by the horizontal rack frame members 506) and partly by the shelf 510, or entirely by the frame 504.

The movement of a shelf 510 from its second configuration to its first configuration allows bins 112 to be returned to the grid 100 (e.g., if the bin 112 is empty, contains damaged items, or contains items that are not being picked as frequently as other items stored in bins 112 within the grid 100). The movement of a shelf 510 from its first configuration to its second configuration allows bins 112 containing frequently picked items to be housed in the storage rack 502, in order to avoid having to repeatedly retrieve that bin 112 from the grid 100.

In order to permit movement of a shelf 510 between its first configuration and its second configuration, the storage rack 502 may include one or more actuators (not shown). For example, the one or more actuators may be coupled to the frame 504. The one or more actuators may be controlled by the processing system 400 shown in Fig. 4. For example, the processing system 400 may issue a command to the one or more actuators to move a shelf 510 from its second configuration to its first configuration prior to lowering of a bin 112 onto the shelf 510. The processing system 400 may then issue a command to the one or more actuators to move the shelf 510 from its first configuration to its second configuration once the bin 112 has been lowered onto the shelf 510.

As an alternative to being controlled by the processing system 400, the one or more actuators may be controlled by a separate control system. For example, a picker (or other operator) may press a button or other input device to control the one or more actuators to move the shelf 510 from its first configuration to its second configuration and/or from its second configuration to its first configuration.

Using actuators to move a shelf 510 from its second configuration to its first configuration allows bins 112 to be returned to the grid 100 without requiring manual handling of bins 112. Where the processing system 400 controls the actuators, bins 112 may be returned to the grid 100 without requiring action by a picker or other operator. Likewise, using actuators to move a shelf 510 from its first configuration to its second configuration allows the storage rack 502 to be restocked with frequently picked items without requiring manual handling of bins 112.

As an alternative to using actuators, a shelf 510 may be manually moveable between its first and second configurations. For example, the shelf 510 may permit a picker (or other operator) to slide the shelf 510 out of its first configuration (e.g., using one or more handles (not shown)), and to subsequently rotate the shelf 510 to its second configuration. As a further alternative, both actuator-initiated movement and manually-initiated movement of a shelf 510 may be provided for. For example, the one or more actuators may be configured to move the shelf 510 from its second configuration to its first configuration, so that a bin 112 can be returned to the grid 100. Once a bin 112 containing items has been lowered onto the shelf 510, a picker may be able to manually pull the shelf 510 out of its first configuration and subsequently rotate the shelf 510 into its second configuration. Other combinations of manually-driven and actuator-driven movement between configurations are also possible. For example, a shelf 510 may be manually returned into its first configuration for delivery of a bin 112 to the grid 100, while being automatically returned (i.e., using the one or more actuators) to its second configuration.

The storage rack 502 may also include one or more sensors configured to detect when a shelf 510 is in its first configuration and/or in its second configuration. Sensors may particularly be implemented where movement of the shelf 510 from its second configuration to its first configuration (and/or from its first configuration to its second configuration) is manually initiated, or initiated by actuators under control of a control system that is separate to the processing system 400. Where the one or more sensors detect that the shelf 510 is in its first configuration, the sensors may indicate to the processing system 400 that the shelf 510 is in its first configuration and that the bin 112 supported by the shelf 510 should be collected by a robot 202, 204. Where the one or more sensors detect that the shelf 510 is in its second configuration, the sensors may indicate to the processing system 400 that bins 112 can then be delivered to other shelves 510 of the storage rack 502, if needed.

### Integration with automated storage and retrieval system

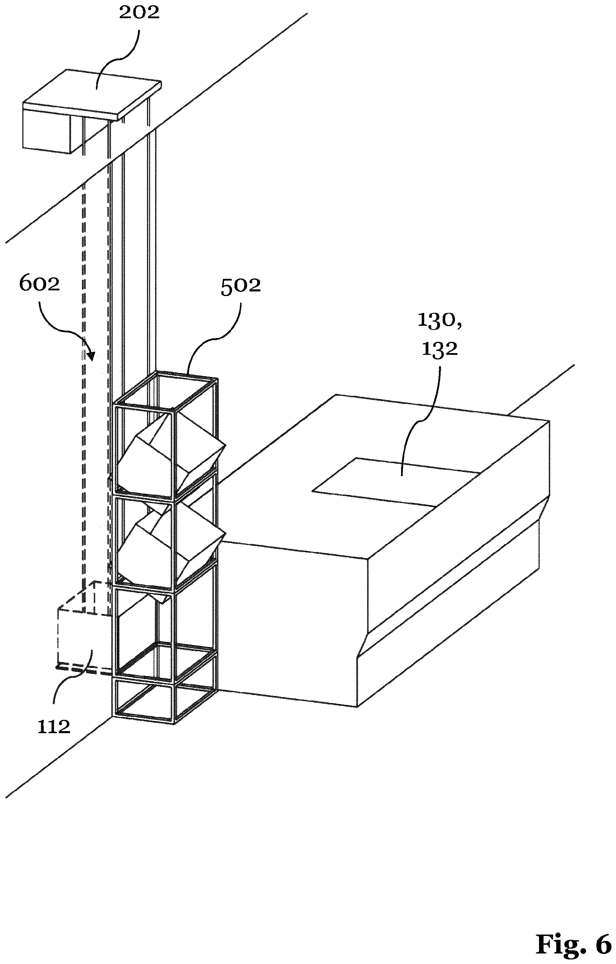

As shown in Fig. 6, the storage rack 502 may be disposed adjacent to a port 130, 132. In this case, the grid 100 includes a rack interface column 602 that has the same functionality as the port columns 126, 128 described above. That is, the rack interface column 602 is an access column that allows for the transfer of bins 112 between the grid 100 and the storage rack 502. The rack interface column 602 provides a vertical channel for lifting a bin 112 from a shelf 510 of the storage rack 502 when the shelf 510 is in its first configuration, or for lowering a bin 112 to a shelf 510 of the storage rack 502 when the shelf 510 is in its first configuration. The rack interface column 602 includes one or more openings or access points aligned with the shelves 510 of the storage rack 502 to permit bins 112 to enter or leave the rack interface column 602. Each shelf 510 of the storage rack 502 extends into the rack interface column 602 when the shelf 510 is in its first configuration, and does not extend into the rack interface column 602 when the shelf 510 is in its second configuration. Therefore, when the shelf 510 is in its second configuration, the shelf 510 (and the bin 112 it supports) does not interfere with bins 112 being lifted or lowered in the rack interface column 602. The rack interface column 602 therefore allows the storage rack 502 to be integrated with the automated storage and retrieval system described above.

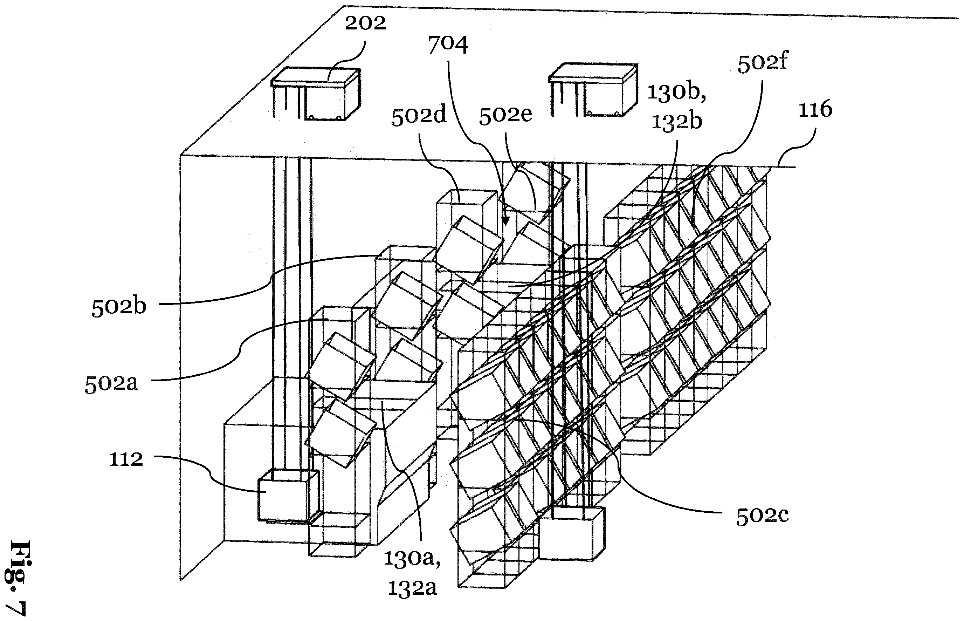

As shown in Fig. 7, multiple ports 130, 132 may have one or more adjacent storage racks 502. Fig. 7 shows a first port location 702 at which first and second storage racks 502a, 502b are disposed either side of a first port 130a, 132a, and a plurality of third storage racks 502c are disposed opposite the first port 130a, 132a. Also shown is a second port location 704 at which fourth and fifth storage racks 502d, 502e are disposed either side of a second port 130b, 132b, and a plurality of sixth storage racks 502f are disposed opposite the second port 130b, 132b. Each of the storage racks 502 is integrated with the grid 100 using a corresponding rack interface column 602. This means that the rail system 116 extends over the first port location 702 and second port location 704 so that the robots 202, 204 can deliver bins 112 from/to the third storage racks 502c and sixth storage racks 502f.

As explained above, a database of the processing system 400 stores, in association with a unique identifier of a bin 112, the position and, optionally, content of each bin 112. Given that bins 112 can be moved between the grid 100 and the storage rack 502 via the rack interface column 602, the position and content of bins 112 stored in the storage rack 502 can be monitored by the processing system 400. This means that, for a given order, the processing system 400 can determine how many items within that order are stored in a storage rack 502, and how many items need to be retrieved from the grid 100. Where multiple ports 130, 132 have one or more adjacent storage racks 502 (e.g., as shown in Fig. 7), the processing system 400 can identify, for a given order, the port 130, 132 having the highest proportion of items of that order stored in adjacent storage rack(s) 502. The processing system 400 can therefore allocate the order to the port 130, 132 having the highest proportion of items of that order stored in its adjacent storage rack(s) 502, in order to minimise the number of bins 112 that need to be retrieved from the grid 100. For example, if three items of an order are stored in storage racks 502a, 502b, 502c at the first port location 702 shown in Fig. 7 but only two items of the order are stored in storage racks 502d, 502e, 502f at the second port location 704, then the order can be allocated to the first port location 702 in order to minimise the number of bins 112 that need to be retrieved from the grid 100 for the order to be fulfilled.

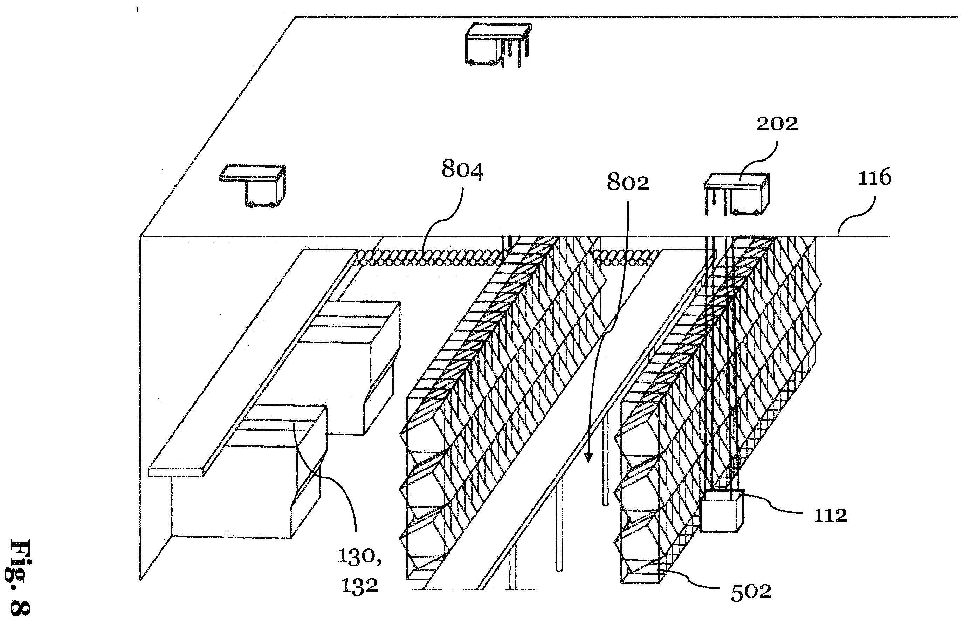

As an alternative to locating storage racks 502 adjacent to ports 130, 132, grid-integrated storage racks 502 may, as shown in Fig. 8, be located in a separate rack storage area 802. The rail system 116 extends over the rack storage area 802 so that the robots 202, 204 can deliver bins 112 from/to the storage racks 502 in the rack storage area 802 using rack storage columns 602 (i.e., in the same way as described above for storage racks 502 adjacent to ports 130, 132). A conveyor system 804 can also be used to transport containers holding picked items (e.g., boxes or totes) from the ports 130, 132 to the rack storage area 802. With this arrangement, an order can be partially fulfilled at a port 130, 132. A container associated with the order (i.e., containing items in the order) can then be transported to the rack storage area 802 (e.g., via the conveyor system 804) where one or more high runners can be picked from the storage racks 502 and added to the order.

Implementing one or more storage racks 502 adjacent to ports 130, 132 means that fulfilment of an order comprising one of the frequently picked items within the bins 112 stored in the storage rack 502 requires fewer bins 112 to be retrieved from the grid 100 by the robots 202, 204 and delivered to the ports 130, 132. This means that the items required for fulfilment of an order are made available more quickly at the ports 130, 132, thereby increasing the rate of picking items, which is especially beneficial for orders with short lead times. This is also the case where one or more storage racks 502 are implemented in a separate rack storage area 802, because fewer bins 112 need to be retrieved from the grid 100 and delivered to the ports 130, 132 to partially fulfil the orders. In addition, in both implementations, the number of bin retrieval operations carried out by the robots 202, 204 is reduced, thereby reducing robot traffic in the grid 100.

The integration of storage racks 502 storing high runners with the grid 100 also means that the contents of bins 112 located within storage racks 502 can be tracked, thereby simplifying inventory management when compared with a system in which high runners are stored in a separate, non-integrated storage area. In addition, items stored in the storage racks 502 can be replenished by the robots 202, 204 using bins 112 from the grid 100, rather than using a separate high runner replenishment system. The processing system 400 can also recognise which bins 112 store items that are frequently picked (high runners) and can move those bins 112 to storage racks 502 to reduce order processing times.

Further, where one or more storage racks 502 are implemented adjacent to ports 130, 132 (e.g., as shown in Figs. 6 and 7), the processing system 400 can determine the port 130, 132 at which an order should be processed in order to minimise the number of bin retrieval operations carried out by the robots 202, 204. This determination is based on considering the content of the bins 112 stored in the storage rack(s) 502 adjacent to the ports 130, 132. In addition, where one or more storage racks 502 are implemented adjacent to a port 130, 132, high runner items in an order can be picked from the bins 112 in the storage rack(s) 502 while a picker is waiting for bins 112 storing other items in the order to be delivered to the port 130, 132, thereby improving throughput at the port 130, 132.

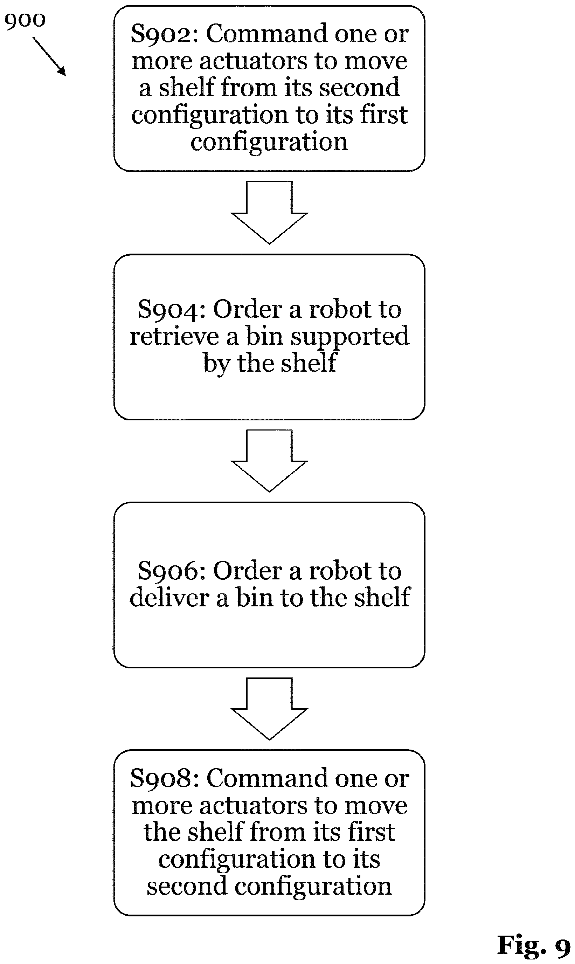

Fig. 9 is a flowchart of a method 900 that may be carried out by the processing system 400 in order to deliver a bin 112 to a shelf 510 of a storage rack 502.

Optionally, at S902, the processing system 400 commands one or more actuators to move the shelf 510 from its second configuration to its first configuration. Alternatively, as mentioned above, the shelf 510 may be manually moved and the processing system 400 may detect (e.g., based on one or more sensors) that the shelf 510 has been moved to its first configuration.

Where the shelf 510 supports a bin 112, the processing system 400, at 904, orders a robot 202, 204 to retrieve the bin 112 supported by the shelf 510.

At S906, the processing system 400 orders a robot 202, 204 to deliver a bin 112 to the shelf 510. Ordering the robot 202, 204 to deliver the bin 112 to the shelf may comprise determining that the bin 112 should be stored in a storage rack 502 based on the frequency of picking items stored in that bin 112 (e.g., based on a picking frequency relative to other bins 112 stored in the grid 100 and/or storage rack(s) 502, and/or based on an absolute picking frequency threshold).

Optionally, at S908, the processing system 400 commands one or more actuators to move the shelf 510 from its first configuration to its second configuration, so that the bin 112 is oriented in its presentation position. Alternatively, as mentioned above, the shelf 510 may be manually moved and the processing system 400 may detect (e.g., based on one or more sensors) that the shelf 510 has been moved to its second configuration.

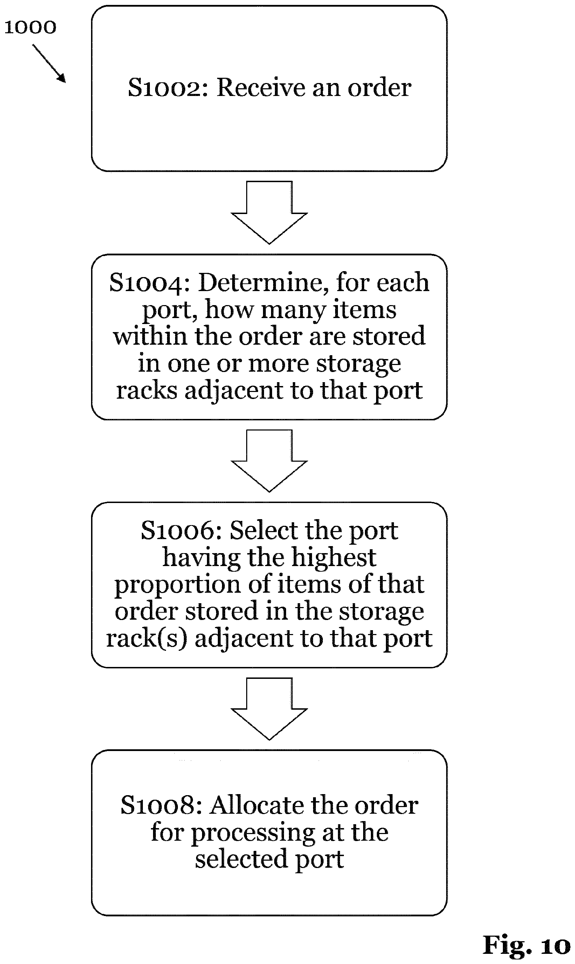

Fig. 10 is a flowchart of a method 1000 that may be carried out by the processing system 400 in order to allocate an order to a port 130, 132, in the case where one or more storage racks 502 are located adjacent to ports 130, 132.

At S1002, the processing system 400 receives an order.

At S1004, the processing system 400 determines, for each port 130, 132, how many items within the order are stored in the storage rack(s) 502 adjacent to that port 130, 132.

At S1006, the processing system 400 selects the port 130, 132 having the highest proportion of items of that order stored in the storage rack(s) 502 adjacent to that port 130, 132.

At S1008, the processing system 400 allocates the order for processing at the selected port 130, 132. Allocating the order for processing at the selected port 130, 132 may comprise ordering a robot 202, 204 to deliver, to the selected port 130, 132, bins 112 containing items that are not stored in the storage rack(s) 502 adjacent to the selected port 130, 132.

### Penultimate comments

Disclosed is automated storage and retrieval system, comprising: a plurality of storage locations, each of the plurality of storage locations being configured to store a respective one of a plurality of storage containers, each of the plurality of storage containers being configured to store one or more items; one or more robotic container-handling vehicles configured to retrieve storage containers from the plurality of storage locations; a storage rack comprising: a frame; and a first container-receiving element and a second-container receiving element, wherein each of the container-receiving elements is supported by the frame, wherein the second container-receiving element is disposed above the first container-receiving element in the frame, and wherein each of the container-receiving elements is movable between: a first configuration relative to the frame, in which the container-receiving element is configured to receive a storage container from a robotic container-handling vehicle of the one or more robotic container-handling vehicles; and a second configuration relative to the frame, in which the container-receiving element is oriented such that the storage container is supported in a presentation position in which an item stored in the storage container can be accessed by a user; and a controller configured to order a robotic container-handling vehicle of the one or more robotic container-handling vehicles to deliver a storage container of the plurality of storage containers to a container-receiving element of the storage rack.

The robotic container-handling vehicle of the one or more robotic container-handling vehicles may be configured to lower a storage container onto the container-receiving element of the storage rack when the container-receiving element is in its first configuration.

The controller may be further configured to actuate the container-receiving element of the storage rack from its second configuration to its first configuration. The controller may be further configured to actuate the container-receiving element of the storage rack from its first configuration to its second configuration.

The one or more robotic container-handling vehicles may be configured to deliver storage containers from the plurality of storage locations to a picking station adjacent to the storage rack. Alternatively, the one or more robotic container-handling vehicles may be configured to deliver storage containers from the plurality of storage locations to a picking station, and wherein the system further comprises a conveyor for transporting items picked from the storage containers delivered to the picking station to a rack storage area comprising the storage rack.

The automated storage and retrieval system may comprise a storage grid comprising the plurality of storage locations. The one or more robotic container-handling vehicles may be arranged to traverse the storage grid.

Also disclosed is a method of operating an automated storage and retrieval system, the method comprising: ordering a robotic container-handling vehicle of one or more robotic container-handling vehicles of the automated storage and retrieval system to deliver a storage container of a plurality of storage containers stored in the automated storage and retrieval system to a container-receiving element of a storage rack.

Ordering the robot to deliver the storage container to the container-receiving element may comprise determining that the storage container is to be stored in the storage rack based on a frequency of picking items stored in the storage container. Determining that the storage container is to be stored in the storage rack based on the frequency of picking items stored in the storage container may comprise determining that the frequency of picking items stored in the storage container exceeds a threshold frequency.

The method may further comprise commanding one or more actuators of the storage rack to move the container-receiving element from a second configuration, in which the container-receiving element is oriented such that the storage container is supported in a presentation position in which an item stored in the storage container can be accessed by a user, to a first configuration, in which the container-receiving element is configured to receive the storage container from the robotic container-handling vehicle. Alternatively or additionally, the method may comprise detecting that the container-receiving element has been moved to its first configuration.

The method may further comprise ordering a robotic container-handling vehicle of the one or more robotic container-handling vehicles to retrieve a container supported by the container-receiving element in its first configuration.

The method may further comprise commanding one or more actuators of the storage rack to move the container-receiving element from its first configuration to its second configuration. Alternatively or additionally, the method may comprise detecting that the container-receiving element has been moved to its second configuration.

Also disclosed is a further method of operating an automated storage and retrieval system, the method comprising: receiving an order comprising one or more items; determining, for each of a plurality of ports of the automated storage and retrieval system, the number of items of the order that are stored in one or more storage racks adjacent to the port; selecting, from the plurality of ports, the port having the highest proportion of items of the order stored in the one or more storage racks adjacent to the port; and allocating the order for processing at the selected port.

Allocating the order for processing at the selected port may comprise ordering a robotic container-handling vehicle of one or more robotic container-handling vehicles of the automated storage and retrieval system to deliver, to the selected port, one or more containers storing items that are not stored in the one or more storage racks adjacent to the selected port.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A storage rack for an automated storage and retrieval system, the storage rack comprising:
a frame; and
a first container-receiving element and a second-container receiving element, wherein each of the container-receiving elements is supported by the frame, wherein the second container-receiving element is disposed above the first container-receiving element in the frame, and wherein each of the container-receiving elements is movable between:
a first configuration relative to the frame, in which the container-receiving element is configured to receive a storage container from a robotic container-handling vehicle; and
a second configuration relative to the frame, in which the container-receiving element is oriented such that the storage container is supported in a presentation position in which an item stored in the storage container can be accessed by a user.

2. The storage rack according to claim 1, wherein each of the container-receiving elements extends at least partly outside the frame when the container-receiving element is in its first configuration.

3. The storage rack according to claim 1 or claim 2, further comprising one or more actuators configured to move one or more of the container-receiving elements.

4. The storage rack according to claim 3, wherein the one or more actuators are configured to move each of the one or more of the container-receiving elements from its second configuration to its first configuration.

5. The storage rack according to claim 3 or claim 4, wherein the one or more actuators are configured to move each of the one or more of the container-receiving elements from its first configuration to its second configuration.

6. The storage rack according to any of claims 1 to 5, wherein when the storage container is in its presentation position, the storage container is angled with respect to the frame such that a base of the storage container is non-horizontal.

7. The storage rack according to any of claims 1 to 6, wherein when the second container-receiving element is in its second configuration, the second container-receiving element does not obstruct transfer of a storage container to the first container-receiving element in its first configuration.

8. An automated storage and retrieval system, comprising:
a plurality of storage locations, each of the plurality of storage locations being configured to store a respective one of a plurality of storage containers, each of the plurality of storage containers being configured to store one or more items;
one or more robotic container-handling vehicles configured to retrieve storage containers from the plurality of storage locations;
a storage rack according to any of claims 1 to 7; and
a controller configured to order a robotic container-handling vehicle of the one or more robotic container-handling vehicles to deliver a storage container of the plurality of storage containers to a container-receiving element of the storage rack.

9. The system according to claim 8, wherein the robotic container-handling vehicle of the one or more robotic container-handling vehicles is configured to lower a storage container onto the container-receiving element of the storage rack when the container-receiving element is in its first configuration.

10. The system according to claim 8 or claim 9, wherein the controller is further configured to actuate the container-receiving element of the storage rack from its second configuration to its first configuration.

11. The system according to any of claims 8 to 10, wherein the controller is further configured to actuate the container-receiving element of the storage rack from its first configuration to its second configuration.

12. The system according to any of claims 8 to 11, wherein the one or more robotic container-handling vehicles are configured to deliver storage containers from the plurality of storage locations to a picking station adjacent to the storage rack.

13. The system according to any of claims 8 to 11, wherein the one or more robotic container-handling vehicles are configured to deliver storage containers from the plurality of storage locations to a picking station, and wherein the system further comprises a conveyor for transporting items picked from the storage containers delivered to the picking station to a rack storage area comprising the storage rack.

14. A method of controlling one or more robotic container-handling vehicles in an automated storage and retrieval system according to any of claims 8 to 13, wherein the method comprises ordering a robotic container-handling vehicle of the one or more container-handling vehicles to deliver a storage container of the plurality of storage containers to a container-receiving element of the storage rack.

15. A computer-readable medium storing instructions that, when executed by one or more processors of a controller of an automated storage and retrieval system according to any of claims 8 to 13, cause the controller to order a robotic container-handling vehicle of the one or more container-handling vehicles to deliver a storage container of the plurality of storage containers to a container-receiving element of the storage rack.
